# EUROPEAN PATENT SPECIFICATION

(11) **EP 0 480 451 B1**
(45) Date of publication and mention of the grant of the patent: **10.05.1995**
(21) Application number: 91117369.8
(22) Date of filing: 11.10.1991
(51) Int. Cl.: B29C 51/10

(54) **Process for preparing thermoinsulating and/or structural formed articles and products so obtained**
Verfahren zum Herstellen wärmeisolierender und/oder eine bestimmte Struktur aufweisender Gegenstände und so hergestellte Gegenstände
Procédé pour fabriquer des objets thermoisolants et/ou présentant une certaine structure et objets ainsi obtenus

(30) Priority: 12.10.1990 IT 2171990
(43) Date of publication of application: 15.04.1992
(73) Proprietor: CENTRO SVILUPPO SETTORI IMPIEGO S.r.l., I-20121 Milan (IT)
(72) Inventor: Addeo, Antonio, I-80035 Nola, Napoli (IT); Pinetti, Lucio, I-20155 Milan (IT); Vezzoli, Annibale, I-22060 Carugo, Como (IT); Mascia, Francesco, I-22070 Guanzate, Como (IT)
(74) Representative: Zumstein, Fritz, Dr.

(56) References cited:
- DE-A- 2 917 907
- DE-A- 3 221 638
- US-A- 3 753 830
- US-A- 4 863 667

## Description

The present invention relates to a process for preparing thermoinsulating and/or structural formed articles and to the products so obtained.

More in particular, the present invention relates to a process for preparing thermoinsulating and/or structural formed articles by thermoforming on foamed preforms.

Still more in particular, the present invention relates to a process for preparing thermoinsulating and/or structural formed articles, which does not necessarily involve the use of a foamed insulating material obtained by means of agents of chlorofluoroalkane nature.

The term "formed article", whenever used in the present specification and in the appended claims, means any structural, stiff, circular or polygonal element to be used in sectors such as transports, household electrical apparatus and appliances, building, autos, telecommunications, office machines, etc., as doors, covers, casings, in particular for refrigerators or frizers, panels, containers, for examples for portable thermal bags and the like.

At present, the articles of the above-cited type are generally obtained starting from two half-shells, which are mechanically assembled by welding of glueing, whereafter the hollow part present between the two half-shells is filled with foamed polyurethane.

Another technique, described in Italian patent application 21815 A/87, comprises the steps of producing by blow-molding a hollow casing made of a thermoplastic polymer and then filling the casing with a foamable polyurethane mixture.

The foamed polyurethane, used as a thermoinsulating material in both the above-illustrated techniques, is prepared starting from a formulation, which consists of an organic diisocyanate, a polyol, a silicone surfactant, a polymerization catalyst and a foaming agent of chlorofluoroalkane nature, such as Freon.

DE 2917907 describes a process in which a laminate composed of PVC and expanded polypropylene is thermoformed and then adhesively bonded to a separately produced base component made of ABS.

US 3753830 discloses an apparatus for laminating a sheet of polymeric material onto a metallic hollow body.

US 4,863,667 discloses a method to apply a provisional protective covering to a profiled panels used in internal upholstery of vehicles: a foil of thermoplastic material is thermoformed onto a separately produced profiled panels.

DE 3221638 describes a process for manufacturing internal lining of safety helmets, where a thermoplastic sheet coupled with an elastic fabric is thermoformed onto an intermediate shock-resistant cap.

At present, the choice of foamed polyurethane as a thermoinsulating material gives rise to problems of ecological nature as the foaming agents based on chlorofluoroalkanes such as Freon are supposed to be one of the main causes which lead to the alteration and destruction of the ozone layer which is present in the stratosphere.

However, replacing polyurethane with an equivalent material is a problem not easy to be solved since this polymer, owing to the fact that it is foamed in situ according to the well known R.I.M. technique (Reaction Injection Molding), permits ot obtain self-supporting stiff structural elements even if the outer casing is made of a thermoplastic polymer instead of a metallic sheet.

That is due to the fact that polyurethane, as it reacts in situ, perfectly adheres to the inner walls of the casing, thereby forming with it a structural integral body.

The Applicant has now found a process, which permits to obtain thermoinsulating, optionally structural elements by using foamed thermoplastic materials, which do not necessarily require the use of chlorofluorocarbons as foaming agents and which guarantee, as compared with the products of the art, at least equal insulating characteristics, the thickness being equal.

Thus, an object of the present invention is a process for preparing thermoinsulating and/or structural formed articles, which comprises at least one of the following steps of:
a) depositing a thermoinsulating preform made of foamed polymeric material onto a thermoforming mold;
b) bringing a thermoplastic polymer plate or sheet to the softening temperature or to a slightly higher temperature, said plate or sheet being weldable to the thermoinsulating preform; and
c) thermoforming said plate or sheet on the thermoinsulating preform in order to weld the plate or sheet on the thermoinsulating preform.

Any foamed polymer can be used for producing the thermoinsulating preform utilized in the present process, although foamed polystyrene and foamed impact-resistant polystyrene or foamed polypropylene and foamed impact-resistant polypropylene are preferred.

Also as regards the plate or sheet to be thermoformed on the preform there are no particular requirements, except that of being prepared from thermoplasic polymers.

Examples of such polymers are:
polystyrene, impact-resistant polystyrene, polystyrene modified with polar monomers such as acrylonitrile, styrene mixtures such as ABS, SAN, etc., polyvinyl chloride, high, mean and low density polyethylene, polypropylene, impact-resistant polypropylene, ethylene/propylene copolymers, acrylic and/or methacrylic resins, polymethacrylates, polyester resins such as PET, PBT, etc.

Preferred products are polystyrene, impact-resistant polystyrene, styrene mixtures, polypropylene and impact-resistant polypropylene.

The plate or sheet to be thermoformed, having an average thickness ranging from 0.5 to 20 mm, is brought to a temperature close to the softening temperature, generally higher than 100°C, preferably ranging from 120° to 200°C as a function of the utilized polymer, by means of known techniques, for example by infrared radiation or by using electrically heated plates.

The thermoforming of the plate or sheet on the thermoinsulating preform can be carried out according to various methods. For example, vacuum can be generated in the mold, if the mold has a concavity, or a counter-mold can be used, which helps in counterforming the plate or sheet on the preform.

Since the plate or sheet - according to both the above-illustrated methods - is at a temperature close to the softening temperature or slightly above said temperature, during the thermoforming said plate or sheet perfectly adheres to the preform in order to form with it a thermoinsulating, optionally structural integral body. The thermoinsulating and/or structural formed bodies prepared by means of the above-described process are, furthermore, a further object of the present invention.

A practical embodiment of the process of the invention, to be considered as an example but not as a limitation thereof, is illustrated in the attached drawing, in which:
- figure 1 is a sectional view of the scheme for preparing a thermoinsulating formed body starting from a concave preform and
- figure 2 is a sectional view of the scheme for preparing a thermoinsulating body starting from a convex preform.

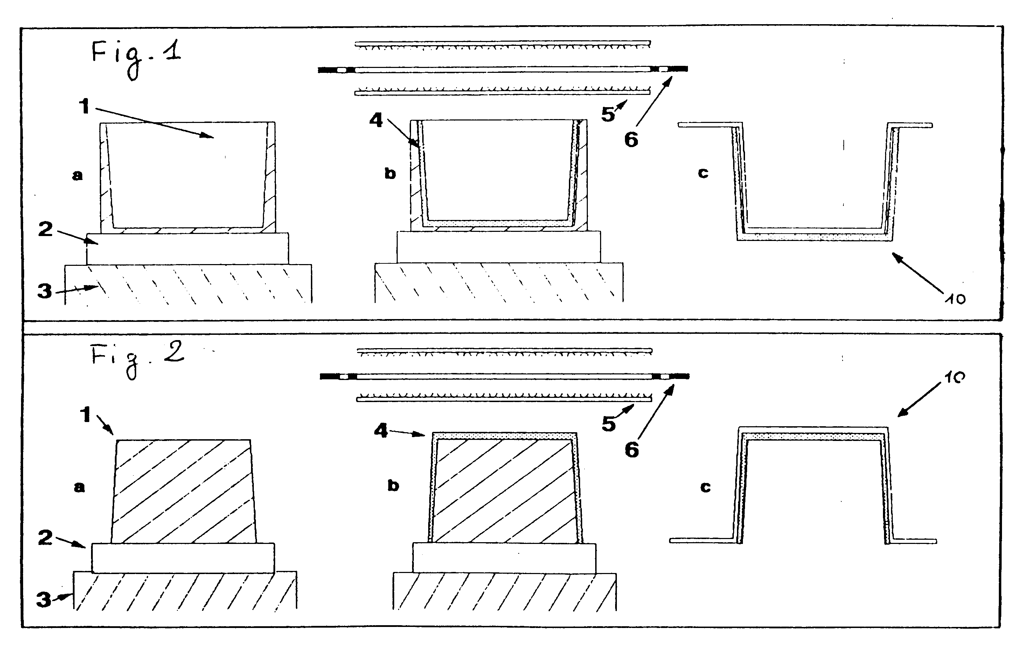

The operation of the process object of the present invention is apparent from the drawing and the preceding description. A preform (4) is laid onto a forming mold (1) fixed to a mold-holding plate (2), which is supported on a bedplate (3). A thermoplastic plate (6),heated up to a temperature close to the polymer softening temperature, or slightly above it, by means of heaters (5),is conformed by means of thermoforming to the preform or by vacuum generation, by means which are not illustrated in figure 1, or by the aid of a countermold not shown in figure 2.

Since the plate is at a thermoplastic processing temperature, during the forming it perfectly adheres to the preform (4) and welds on it to form a thermoinsulating, optionally structural formed body or article (10).

In the practical embodiment of the present invention, various changes, modifications and variations can be brought to the various parts which form the scheme for producing thermoinsulating and/or structural formed articles, which is illustrated, as an example, in the figures of the attached drawing, without limiting, however, the scope of the present invention.

## Claims

1. A process for preparing thermoinsulating and/or structural formed articles, which comprises the following steps:
a) depositing a thermoinsulating preform, made of foamed polymeric material, onto a thermoforming mould;
b) bringing a thermoplastic polymer plate or sheet to the softening temperature or to a slightly higher temperature, said plate or sheet being weldable to the thermoinsulating preform; and
c) thermoforming the plate or sheet on the thermoinsulating preform in order to weld the plate or sheet on the thermoinsulating preform.

2. The process according to claim 1, wherein the thermoinsulating preform is made of foamed polystyrene or foamed impact-resistant polystyrene, or of foamed polypropylene or foamed impact-resistant polypropylene.

3. The process according to any of the preceding claims, wherein the plate or sheet to be thermoformed is made of polystyrene, impact-resistant polystyrene, styrene mixtures, polypropylene, impact-resistant polypropylene.

4. The process according to any of the preceding claims, wherein the plate or sheet to be thermoformed has an average thickness ranging from 0.5 to 20 mm.

5. The process according to any of the preceding claims, wherein the plate or sheet is brought to a temperature higher than 100°C, preferably ranging from 120° to 200°C.

## Patentansprüche

1. Verfahren zur Herstellung von wärmeisolierenden und/oder strukturell geformten Gegenständen, das die folgenden Stufen umfaßt:
a) das Aufbringen einer wärmeisolierenden Vorform aus geschäumtem Polymermaterial auf eine Form für die Thermoformung;
b) das Bringen einer thermoplastischen Polymerplatte oder -folie auf die Erweichungstemperatur oder auf eine geringfügig höhere Temperatur, wobei diese Platte oder Folie auf die wärmeisolierende Vorform schweißbar ist und
c) die Thermoformung der Platte oder Folie auf die warmeisolierende Vorform, um die Platte oder Folie auf die wärmeisolierende Vorform aufzuschweißen.

2. Verfahren gemäß Anspruch 1, worin die wärmeisolierende Vorform aus geschäumtem Polystyrol oder geschäumtem, schlagfesten Polystyrol oder aus geschäumtem Polypropylen oder geschäumtem, schlagfesten Polypropylen besteht.

3. Verfahren gemäß einem der vorhergehenden Ansprüche, worin die der Thermoformung zu unterziehende Platte oder Folie aus Polystyrol, schlagfestem Polystyrol, Styrolmischungen, Polypropylen, schlagfestem Polypropylen besteht.

4. Verfahren gemäß einem der vorhergehenden Ansprüche, worin die der Thermoformung zu unterziehende Platte oder Folie eine durchschnittliche Dicke im Bereich von 0,5 bis 20 mm besitzt.

5. Verfahren gemäß einem der vorhergehenden Ansprüche, worin die Platte oder Folie auf eine Temperatur von höher als 100°C, vorzugsweise im Bereich von 120° bis 200°C gebracht wird.

## Revendications

1. Un procédé de fabrication de produits thermo-isolants et/ou préfabriqués qui comprend les étapes suivantes:
a) déposer une ébauche thermo-isolante, à base de matériau polymère expansé sur un moule de thermo-formage;
b) amener une feuille ou plaque de polymère de thermoplastique à la température de ramollissement ou à une température légèrement supérieure à ladite température de ramollissement, ladite feuille ou plaque étant susceptible d'être soudé à l'ébauche thermo-isolante et;
c) thermoformer ladite feuille ou plaque sur l'ébauche thermo-isolante afin de souder la feuille ou plaque sur l'ébauche thermo-isolante.

2. Le procédé selon la revendication 1, dans lequel l'ébauche thermo-isolante est fabriquée à partir de polystyrène expansé ou de polystyrène expansé résistant aux chocs, ou à partir de polypropylène expansé ou de polypropylène expansé résistant aux chocs.

3. Le procédé selon l'une quelconque des revendications précédentes, dans lequel la feuille ou plaque à thermo-former est fabriquée à partir de polystyrène, de polystyrène résistant aux chocs, de mélange de styrènes, de polypropylène, de polypropylène résistant aux chocs.

4. Le procédé selon l'une quelconque des revendications précédentes, dans lequel la feuille ou plaque à thermo-former présente une épaisseur moyenne de l'ordre de 0,5 à 20mm.

5. Le procédé selon l'une quelconque des revendications précédentes, dans lequel la feuille ou plaque est amenée à une température supérieure à 100°C, de préférence de 120 à 200°C.
